# EUROPEAN PATENT SPECIFICATION

(11) **EP 1 680 966 B1**
(45) Date of publication and mention of the grant of the patent: **12.12.2007**
(21) Application number: 04791390.0
(22) Date of filing: 27.10.2004
(51) Int. Cl.: A23L 1/172, A23P 1/08

(54) **CORN GRAIN-FLAVOURING METHOD**
VERFAHREN ZUR AROMATISIERUNG VON MAISKÖRNERN
PROCEDE PERMETTANT DE RELEVER LE GOUT DES GRAINS DE MAIS

(30) Priority: 07.11.2003 ES 200302606
(43) Date of publication of application: 19.07.2006
(73) Proprietor: TECNOLOGIAS APLICADAS DEL MAIZ, S.L., E-08272 (ES)
(72) Inventor: GALCERAN MARTORELL, Carlos, E-08272 Sant Fruitos De Bages (ES)
(74) Representative: Toro Gordillo, Ignacio Maria
(86) International application number: PCT/ES2004/000471
(87) International publication number: WO 2005/044024

(56) References cited:
- EP-A2- 0 217 368
- WO-A1-94/23589
- FR-A1- 2 680 082
- US-A- 4 767 635

## Description

### OBJECT OF THE INVENTION

The present invention relates to a corn grain-flavouring method intended for human consumption.

The main object of the invention is to achieve an optimal degree of salting for corn kernels with the subsequent effect on their flavour, as well as optionally incorporating any other supplementary food flavouring, whether it is salty or sweet.

The invention is therefore intended for the food industry.

### BACKGROUND OF THE INVENTION

As is well known, corn kernels, which are consumed either in their natural state or toasted, are included within the wide range of products usually consumed as a "snack".

Corn kernels are normally marketed as a "salty" product with a strong flavour.

In order to achieve this flavouring of corn according to the intended use of the popcorn preparation, for example in the case of products intended to be prepared by means of microwaves, manufacturers currently mix the corn in sealed containers with butter, salt or flavouring agents, which makes the corn lose its natural qualities; other manufacturers add these flavouring agents after the corn has expanded, once it has become popcorn, also reducing the quality and durability of the product characteristics.

There are patents such as WO9423589, FR2680082, US4767635 and EP0217368, in which the corn kernels are soaked in brine, eventually comprising flavouring agents, and dried afterwards.

### DESCRIPTION OF THE INVENTION

The process proposed by the invention resolves the drawbacks set forth above, since the brine is in a "hyper saturated" state and the drying step is carried out by spreading out the corn on perforated trays and making pass hot air through the perforations, and the following operational steps are established therein for that purpose:
- A predetermined amount of water, in accordance with the amount of corn kernels to be treated, is introduced in a container with a suitable capacity, and sodium chloride is incorporated to the foregoing, also in a suitable amount, so as to obtain hypersaturated brine.
- The water-sodium chloride mixture is subjected to a stirring step to facilitate obtaining brine.
- Corn kernels are introduced in the container after obtaining the brine.
- The corn is kept in the brine for a time comprised between 8 and 20 hours at room temperature and under atmospheric pressure until the corn absorbs all the brine. The variability of the time for this operational step is determined by the type of corn kernels used, i.e. by the characteristics and origin of the corn, which also affect the amount of salt and water used.
- Then a corn drying step is carried out, such that after it is taken out of said container it is spread out on perforated trays, through the perforations of which hot air passes, returning the corn kernels to their natural moisture level, which drying step is carried out for a time comprised between 1 to 2 hours according to the drying air temperature and the type of corn.
- Any food flavour can also be incorporated during this drying process or in the prior step of swelling the corn.
- Finally, and after drying the corn, the kernels are subjected to a surface coating step with a fixing agent for foods, such as food-grade shellac for example, to substantially increasing the temperature of the water, a shortening of the process which is obviously obtained at the expense of an increase in energy consumption.

### PRACTICAL EMBODIMENT OF THE INVENTION

Ninety liters of water and 25 kg of sodium chloride were introduced in a container with a 1000 liter capacity.

After stirring the mixture, hypersaturated brine was obtained after 12 hours.

Then 300 kg of corn kernels of the popping corn variety were introduced in the container.

The corn pulp had absorbed all the brine after 8 to 12 hours, said absorption being carried out at room temperature and under atmospheric pressure.

Then the corn was spread out on perforated trays for which hot air was supplied, specifically at a temperature of 48°C, drying the corn kernels after 60 minutes, the kernels returning to their original moisture level.

The dried corn was then introduced in a rotating drum in which food-grade shellac was applied as a fixing agent, as well as flavouring agents, and after 60 minutes the entire surface of the corn kernels was coated with said fixing agent.

The product was finally packaged, being suitable for consumption thereof.

It is therefore understood that the product starts off raw and finishes raw, treated so as to be used in any type of machine for its expansion, for example in microwaves, paella dishes, pans, hot air machines, etc.

Having sufficiently described the nature of the invention as well as a practical embodiment, it is stated for all effects and purposes that the described elements can be modified provided that this does not involve an alteration of the essential features of the invention which are claimed below.

## Claims

1. A process for flavouring corn kernels, specifically corn kernels intended for human consumption, **characterized in that** the following operational steps are established therein:
- A predetermined amount of water, in accordance with the amount of corn kernels to be treated, is introduced in a container with a suitable capacity, and sodium chloride is incorporated to the foregoing, also in a suitable amount, so as to obtain hypersaturated brine.
- Corn kernels are introduced in the container after obtaining the brine.
- The corn is kept in the brine for a time comprised between 8 and 20 hours at room temperature and under atmospheric pressure.
- Then a corn drying step is carried out, after it is taken out of said container, by means of spreading it out on perforated trays and applying hot air for a time comprised between 1 to 2 hours until the corn kernels recover their original moisture level.
- The corn kernels are subjected to a surface coating with a fixing agent for foods, such as food-grade shellac and flavouring agents for example.
- The product is packaged.

2. A process for flavouring corn kernels according to claim 1, **characterized in that** the water-sodium chloride mixture can be subjected to a stirring step to facilitate obtaining brine.

3. A process for flavouring corn kernels according to claim 1, **characterized in that** the step of keeping the corn in the brine can be carried out under pressure and/or at a temperature substantially higher than room temperature in order to shorten the time of said step.

4. A process for flavouring corn kernels according to claim 1, **characterized in that** any food flavour can be incorporated to the corn either in the corn swelling step or in the drying step.

## Patentansprüche

1. Verfahren zur Aromatisierung von Maiskörnern, nämlich von für den menschlichen Verzehr bestimmten Maiskörnern, **dadurch gekennzeichnet, dass** in diesem die folgenden Arbeitsschritte festgelegt sind:
- In einem Behälter geeigneter Kapazität wird eine übereinstimmend zur Menge der zu behandelnden Maiskörner vorbestimmte Wassermenge eingeleitet, und diesem wird seinerseits Natriumchlorid in einer zur Erzielung einer übergesättigten Salzlake geeigneten Menge eingebracht.
- Nach der Erhaltung der Salzlake wird dem Behälter der Mais in Körnern zugeführt.
- Der Mais wird während einer Zeitspanne von zwischen 8 bis 20 Stunden bei Raumtemperatur und Luftdruck in der Salzlake behalten.
- Nach seiner Entnahme aus dem genannten Behälter geht man zu einer Trocknungsphase des Maises durch dessen Ausbreitung auf den perforierten Wannen und unter Anwendung heißer Luft, während einer Zeitspanne zwischen 1 und 2 Stunden über, bis die Maiskörner ihre ursprüngliche Feuchtigkeit wiedererlangen.
- Die Maiskörner werden einer Oberflächenbeschichtung mit einem Lebensmittel-Fixierungsmittel, wie zum Beispiel einem Lebensmittel-Lack und Geschmacksverstärkern unterzogen.
- Man geht zum Verpacken des Produktes über.

2. Verfahren zur Aromatisierung von Maiskörnern gemäß Anspruch 1 **dadurch gekennzeichnet, dass** das Wasser-Natriumchloridgemisch zur Ermöglichung der Erhaltung der Salzlake einer Rührphase unterzogen werden kann.

3. Verfahren zur Aromatisierung von Maiskörnern gemäß Anspruch 1 **dadurch gekennzeichnet, dass** die Phase der Beibehaltung des Maises in der Salzlake, zur Verkürzung der Zeitspanne der Dauer dieser Phase, unter Druck und/oder bei einer zur Raumtemperatur wesentlich höheren Temperatur durchgeführt werden kann.

4. Verfahren zur Aromatisierung von Maiskörnern gemäß den vorgehenden Ansprüchen **dadurch gekennzeichnet, dass** sowohl in der Schwell- als auch in der Trocknungsphase des Maises diesem irgendein Lebensmittelaroma zugefügt werden kann.

## Revendications

1. Procédé d'aromatisation de grains de maïs, particulièrement de grains de maïs destinés à la consommation humaine, **caractérisé en ce que** dans celui-ci on établit les phases opérationnelles suivantes :
- Dans un réservoir à capacité appropriée, on introduit une quantité prédéterminée d'eau, en proportions appropriées à la quantité de grains de maïs à traiter, et on y incorpore du chlorure de sodium, à son tour en une quantité appropriée pour obtenir une saumure à l'état hypersaturé.
- Après l'obtention de la saumure, on introduit dans le réservoir les grains de maïs.
- On maintient le maïs dans la saumure pendant un période de temps allant de 8 heures à 20 heures, à température ambiante et à pression atmosphérique,
- On procède à une phase de séchage du maïs, après son extraction dudit réservoir, en l'étalant sur des plateaux perforés, et en appliquant de l'air chaud pendant une période de temps allant de 1 à 2 heures jusqu'à ce que les grains de maïs récupèrent leur humidité originale.
- On soumet les grains à un enrobage superficiel à l'aide d'un fixateur alimentaire, comme par exemple une laque alimentaire et des agents aromatisants
- On procède au conditionnement du produit.

2. Procédé d'aromatisation de grains de maïs, selon la revendication 1, **caractérisé en ce que** le mélange eau-chlorure de sodium est susceptible d'être soumis à une phase de brassage pour faciliter l'obtention de la saumure.

3. Procédé d'aromatisation de grains de maïs, selon la revendication 1, **caractérisé en ce que** la phase de maintenance du maïs dans la saumure peut être réalisée à pression et/ou à une température essentiellement supérieure à celle ambiante, pour réduire dans le temps l'amplitude de ladite phase.

4. Procédé d'aromatisation de grains de maïs, selon les revendications précédentes, **caractérisé en ce que**, soit dans la phase de gonflement du maïs, soit dans celle de séchage, on peut incorporer à celui-ci n'importe quel arôme alimentaire.
